# EUROPEAN PATENT APPLICATION

(11) **EP 1 478 081 A2**
(43) Date of publication of application: **17.11.2004**
(21) Application number: 04009940.0
(22) Date of filing: 27.04.2004
(51) Int. Cl.: H02K 11/04, H02K 5/22

(54) **Electric motor or gearmotor**

(30) Priority: 13.05.2003 IT pd20030036
(71) Applicant: NUOVA S.M.E.- S.p.A., 12025 Dronero (Prov. of Cuneo) (IT)
(72) Inventor: Basso, Maurizio, 36031 Dueville (Prov. of Vicenza) (IT); Surian, Antonio, 45100 Rovigo (IT)
(74) Representative: Modiano, Guido, Dr.-Ing.

(57) **Abstract**

An electric motor or gearmotor of the type comprising internally an electronic board (11, 111, 211) and the connection (12, 112) to a wiring assembly (13, 213) for the board (11, 111, 211); the board (11, 111, 211) and the wiring assembly (13, 213) are preassembled, the connection (12, 112), together with the associated board (11, 111, 211), being sealed in a tray-like container (14, 114, 214); the container is associated with a complementarily shaped compartment (15, 215) that is provided on the housing (16, 216) of the electric motor or gearmotor (10, 210).

## Description

The present invention relates to an electric motor or gearmotor of the type that comprises internally an electronic board for position, speed and acceleration control and a wiring assembly for said board.

Actuation motors and gearmotors, particularly for sliding doors or power windows of cars, for adjusting the position, height, inclination and shape of seats, for adjusting the position of the steering wheel and of the pedals, and the like, are currently known.

The motors and gearmotors are generally driven by electric motors that are in turn controlled by an electronic board.

The electronic board is connected to the controls that can be operated by a user by means of appropriate wiring.

Some of the most delicate critical points for'the correct operation and durability of such motors and gearmotors are linked to the fitting of said electronic board and of the respective wiring on said motors and gearmotors.

These critical points relate to mechanical strength and corrosion resistance and to the various effects of waters and other chemical agents on the board-wiring assembly.

Mechanical strength is considered first of all with reference to the handling that the electronic board undergoes before and during assembly on the motor/gearmotor and during installation on the respective mechanism to be actuated, and secondly with reference to stresses during operation.

Generally, an ordinary fixing of the wiring to the electronic board is not adapted to withstand the stresses.

To obviate this, additional mechanical fixings of the wiring, such as for example labyrinth-like paths, taping and clips, are used.

Known methods for avoiding corrosion and keeping away water and other chemical agents require accommodating the board and the respective wiring within the motor/gearmotor assembly, which is rendered appropriately hermetic by using sealing gaskets.

One alternative consists in sealing the regions where the electronic board is connected to the outside by way of liquid gaskets or sealing polymers that are dispensed directly in the seats inside the motor/gearmotor assembly in which the electronic boards are accommodated.

These currently known remedies, although being widely adopted, are not free from drawbacks.

Both of these solutions, i.e., providing the entire motor/gearmotor with a high liquid-tightness level and sealing the regions where the electronic board is connected to the outside upon assembly of the motor/gearmotor, are highly expensive.

In the first case, in order to provide a good degree of protection for example in a motor/gearmotor driven by a direct-current permanent-magnet electric motor, a frame is used which is appropriately drawn and contoured so as to accommodate the board and the respective wiring, and sealing gaskets are used at the various interfaces between components.

The drawn frame has distinctly higher costs, in terms of molds and of the individual part, than a motor/gearmotor that does not need to withstand water and oxidation.

In the second case, low-viscosity sealing resins are used to seal the board and the wiring in the corresponding compartment formed within the frame; the adaptability of such resins to the automated assembly process is low, since they require unusual hardening temperatures and/or times and therefore they are scarcely adaptable to an automated process.

The aim of the present invention is to provide an electric motor or gearmotor of the type that comprises, sealed inside it, an electronic board for position, speed and acceleration control and a wiring assembly for the board, which is capable of obviating the drawbacks shown by known types.

Within this aim, an object of the present invention is to provide an electric motor or gearmotor in which the connection between the board and the wiring is capable of ensuring, at least for an equal performance, a higher mechanical strength with respect to the handling and operating stresses than known types.

Another object of the present invention is to provide an electric motor or gearmotor that is low in cost both in terms of mold and in terms of the part itself.

Another object of the present invention is to provide an electric motor or gearmotor in which the board and the wiring can be assembled easily and at low cost.

Another object of the present invention is to provide an electric motor or gearmotor in which the board and the wiring can be sealed easily and quickly.

Another object of the present invention is to provide an electric motor or gearmotor that can be manufactured with known systems and technologies.

This aim and these and other objects that will become better apparent hereinafter are achieved by an electric motor or gearmotor of the type that comprises internally an electronic board and the connection to a wiring assembly for said board, said electric motor or gearmotor being characterized in that said board and said wiring assembly are preassembled, said connection, together with said associated board, being sealed in a tray-like container, said container being associated with a complementarily shaped compartment that is provided on the housing of said electric motor or gearmotor.

Further characteristics and advantages of the present invention will become better apparent from the following detailed description of three preferred but not exclusive embodiments thereof, illustrated by way of nonlimiting example in the accompanying drawings, wherein:

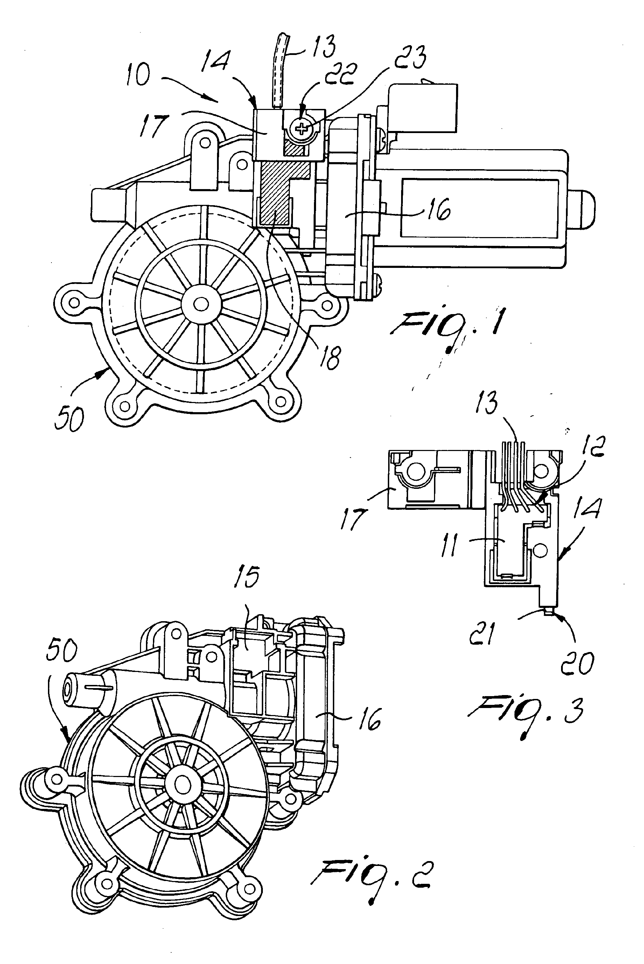

Figure 1 is a side view of an electric gearmotor according to the invention;
Figure 2 is a perspective view of part of an electric motor or gearmotor according to the invention;

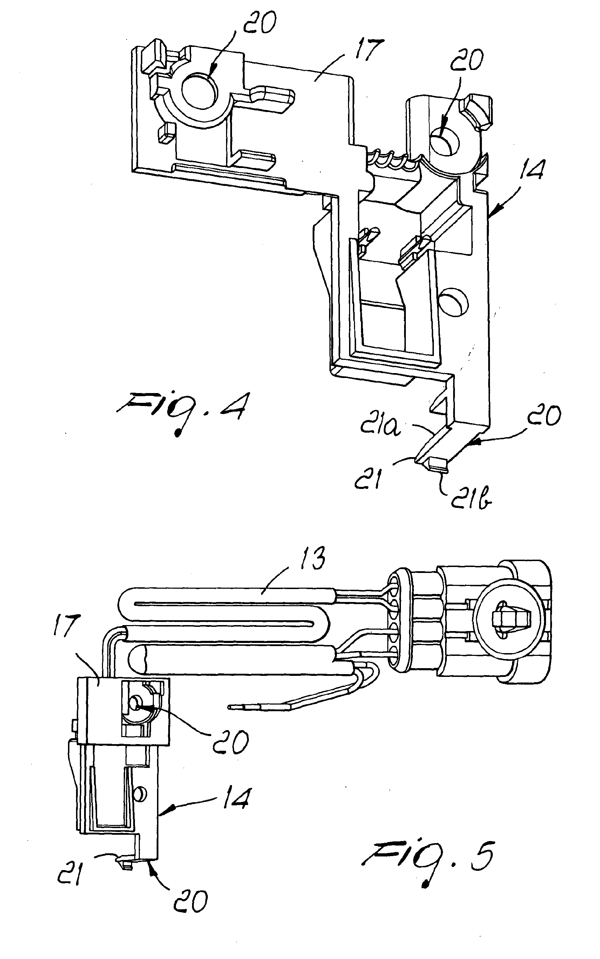

Figure 3 is a top view of a tray-like container according to the invention, containing an electronic board and a connection to a wiring assembly, in a first embodiment;
Figure 4 is a perspective view of a tray-like container according to the invention in a first embodiment;
Figure 5 is a perspective view of a tray-like container according to Figure 4, assembled to a wiring assembly according to the invention;

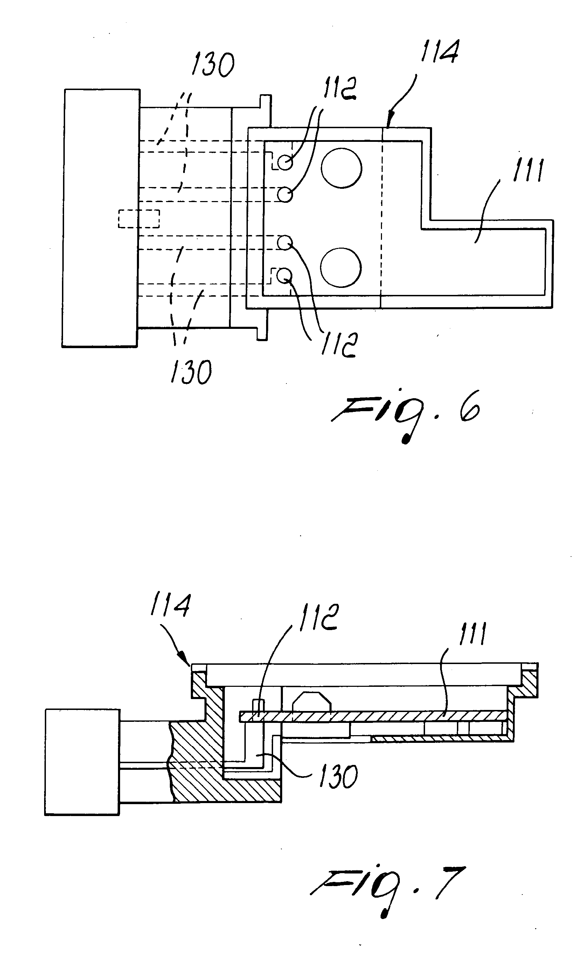

Figure 6 is a top view of a tray-like container according to the invention in a second embodiment;

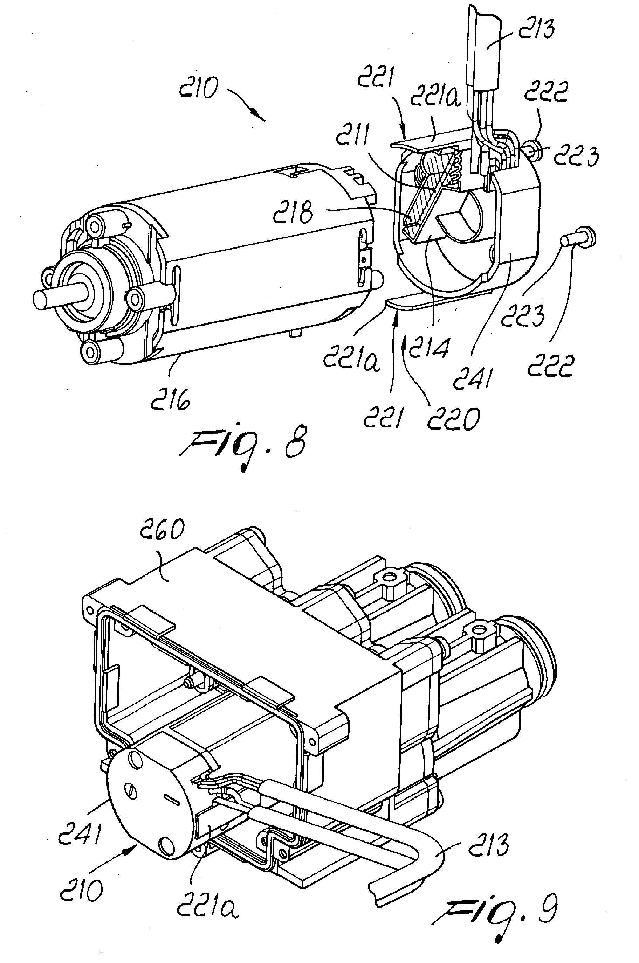

Figure 7 is a partially sectional side view of a tray-like container of Figure 5;
Figure 8 is a perspective view of an electric motor or gearmotor according to the invention in a third embodiment;
Figure 9 is a view of an application of an electric motor or gearmotor according to the invention in a third embodiment as shown in Figure 8.

With reference to the figures, an electric motor or gearmotor according to the invention in a first embodiment is generally designated by the reference numeral 10.

The electric motor or gearmotor 10 comprises, sealed inside it, an electronic board 11 for position, speed and acceleration control and the connection 12 to a wiring assembly 13 for the board 11.

The electric motor or gearmotor 10 is characterized in that the board 11 and the wiring assembly 13 are preassembled by way of the connection 12.

The connection 12 and the respective board 11 connected thereto are sealed within a tray-like container 14.

The container 14 is then accommodated in a complementarily shaped compartment 15 provided in the housing 16 of said electric motor or gearmotor 10, which in this first embodiment is of the gearmotor type 50.

Preassembly is provided by fixing one end of the wiring assembly 13 to the electronic board 11.

The joining region between the board 11 and the end of the wiring 13 provides the connection 12.

The board 11 and the associated connection 12 are arranged inside the container 14.

The container 14 is provided with a flap 17 that has a snap-action closure and is adapted to lock the end of the wiring 13.

The door 17 is adapted to keep the wiring 13 in position during the application of sealant 18 and until such sealant 18 has reached a consistency that allows to handle the assembly constituted by the container 14, the board 11 and the wiring 13 without problems.

Once the hardening of the sealant 18 has been completed, the container 14 is accommodated in the compartment 15 of the housing 16.

The mechanical part of the electric motor or gearmotor 10 is already assembled during the insertion of the container 14 in the complementarily shaped compartment 15.

The container 14 is fixed inside such compartment 15 by way of reversible locking means 20.

The reversible locking means 20 are constituted by a reversible interlocking tab 21.

The tab 21 is formed by an elastically deformable plate 21a with an interlocking tooth 21b.

The locking means 20 also comprise a threaded coupling 22.

The threaded coupling is constituted by a fixing screw 23.

The screw 23 passes through the container laterally with respect to the connection 12, fastening the flap 17 in the closed position.

This arrangement of the screw 23 further improves the strength of the connection 12.

In a second embodiment, an electric motor or gearmotor 110 according to the invention comprises a container 114 provided with integrated connectors 130.

The container 114 accommodates only the electronic board 111.

Such connectors 130 provide the connection 112 between the board 111 and the wiring.

An electric motor according to the invention in a third embodiment is designated by the reference numeral 210 and is shown in Figure 8.

In the electric motor 210, the container 214 is internally integrated so as to be monolithic with a containment cover 241 of the electric motor 210.

In this embodiment, the electronic board 211 is accommodated in the corresponding container 214, which is rigidly coupled to the containment cover 241, and together with the board the wiring 213 also is fixed to the container 214 and thus to the containment cover 241.

As in the two embodiments cited above, in this case also the board 211 and the connection between the board 211 and the respective wiring 213 are embedded in the sealant 218 that is dispensed inside the container 214.

The containment cover 241 is then assembled to the electric motor 210 of which it is a part, and the electric motor 210 is then inserted for example in a linear actuator for a robotized gearshift, illustrated in Figure 9 and designated by the reference numeral 260.

The containment cover 241 is then fixed to a housing 216 of the electric motor 210 by way of reversible locking means 220.

The reversible locking means 220 are constituted by two reversible interlocking tabs 221 and by a threaded coupling 222.

Each one of the tabs 221 is provided by a plate-like element 221a that is elastically deformable and is monolithic with the cover 241.

The threaded coupling 222 is constituted by two fixing screws 223.

In practice it has been found that the invention thus described solves the problems noted above in known types of electric motor or gearmotor of the type that comprises internally an electronic board for controlling position, speed and acceleration and a wiring assembly for said board.

In particular, the present invention provides an electric motor or gearmotor in which the connection between the electronic board and the respective wiring is particularly resistant to the mechanical stresses that such connection must undergo during assembly and when the actuation system to which it belongs is operating.

Moreover, the present invention provides an electric motor or gearmotor in which the electronic control board and its connection to the wiring are sealed against water and are protected against chemical agents, dust and impacts.

Moreover, the present invention provides an electric motor or gearmotor whose assembly requires only limited changes to existing assembly lines, appropriately integrated by a manual or semiautomatic screwing station for the container or containment cover and for testing the electronic components.

Finally, the present invention provides an electric motor or gearmotor in which said tray-like container or said containment cover has such a shape that it can be positioned on pallets capable of accommodating and subjecting a plurality of units simultaneously to the dispensing of sealant.

Such pallets can be advantageously passed through an oven in order to accelerate the hardening of the sealant.

In practice the materials employed, so long as they are compatible with the specific use, as well as the dimensions, may be any according to requirements and to the state of the art.

The disclosures in Italian Utility Model Application No. PD2003U000036 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An electric motor or gearmotor of the type that comprises internally an electronic board (11, 111, 211) and the connection (12, 112) to a wiring assembly (13, 213) for said board (11, 111, 211), said electric motor or gearmotor being **characterized in that** said board (11, 111, 211) and said wiring assembly (13, 213) are preassembled, said connection (12, 112), together with said associated board (11, 111, 211), being sealed in a tray-like container (14, 114, 214), said container being associated with a complementarily shaped compartment (15, 215) that is provided on the housing (16, 216) of said electric motor or gearmotor (10, 210).

2. The electric motor or gearmotor according to claim 1, **characterized in that** said container (14, 114, 214) is associated with said compartment (15, 215) by way of reversible locking means (20, 220).

3. The electric motor or gearmotor according to claim 2, **characterized in that** said reversible locking means (20, 220) are constituted by at least one tab with reversible interlocking (21, 221).

4. The electric motor or gearmotor according to one or more of the preceding claims, **characterized in that** said reversible locking means (20, 220) also comprise a threaded coupling (22, 222).

5. The electric motor or gearmotor according to one or more of the preceding claims, **characterized in that** said container (14, 114, 214) is provided with a flap (17, 217) with snap-acting closure, which is adapted to lock the end of said wiring (13, 113, 213) that is connected to said board (11, 111, 211) so as to provide said connection (12, 112, 212).

6. The electric motor or gearmotor according to one or more of the preceding claims, **characterized in that** sealant (18, 118, 218) is dispensed on said board (11, 111, 211) and said connection (12, 112, 212) inside said container (14, 114, 214).

7. The electric motor or gearmotor according to claim 1, **characterized in that** said container (114) is provided with integrated connectors (130), only the electronic board (112) being accommodated in said container (114), said connectors (130) providing said connection (112) between said board (112) and the wiring (113).

8. The electric motor or gearmotor according to claim 3, **characterized in that** said at least one tab (21) is constituted by an elastically deformable plate (21a) provided with an interlocking tooth (21b).

9. The electric motor or gearmotor according to claim 4, **characterized in that** said threaded coupling (22) comprises a fixing screw (23), which is arranged laterally to said connection (12) so as to fasten said flap (17) in the closed position.

10. The electric motor or gearmotor according to claim 1, **characterized in that** said container (214) is integrated in a containment cover (241) of said actuation system (210).

11. The electric motor or gearmotor according to claims 2, 3 and 10, **characterized in that** said at least one tab (221) is constituted by two plate-like elements (221a), which are elastically deformable, are rigidly coupled to said containment body (241), and are adapted to fix said cover (241) to the corresponding housing (216).

12. The electric motor or gearmotor according to claims 2, 4 and 10, **characterized in that** said threaded coupling (222) is provided by at least two fixing screws (223).
